**Europäisches Patentamt**

**European Patent Office**

**Office européen des brevets**

(11) Veröffentlichungsnummer : **0 291 701 B1**

(12) **EUROPÄISCHE PATENTSCHRIFT**

(45) Veröffentlichungstag der Patentschrift :
**15.05.91 Patentblatt 91/20**

(51) Int. Cl.⁵ : **C21C 5/56, F27D 13/00, C21B 13/02**

(21) Anmeldenummer : **88106150.1**

(22) Anmeldetag : **18.04.88**

(54) **Chargiergutvorwärmer zum Vorwärmen von Chargiergut eines metallurgischen Schmelzaggregates.**

(30) Priorität : **21.04.87 DE 3713369**

(43) Veröffentlichungstag der Anmeldung :
**23.11.88 Patentblatt 88/47**

(45) Bekanntmachung des Hinweises auf die
Patenterteilung :
**15.05.91 Patentblatt 91/20**

(84) Benannte Vertragsstaaten :
**AT BE CH DE ES FR GB GR IT LI LU NL SE**

(56) Entgegenhaltungen :
**EP-A- 0 031 160**
**WO-A-85/04467**

(56) Entgegenhaltungen :
**DE-A- 2 234 240**
**DE-A- 2 551 100**
**DE-A- 3 219 984**
**DE-C- 284 770**

(73) Patentinhaber : **KORTEC AG**
**Baarerstrasse 21**
**CH-6300 Zug (CH)**

(72) Erfinder : **Weber, Ralph**
**Rua Campo Belo, 300**
**Laranjeiras 22.221 Rio de Janeiro (BR)**

(74) Vertreter : **Blumbach Weser Bergen Kramer**
**Zwirner Hoffmann Patentanwälte**
**Radeckestrasse 43**
**W-8000 München 60 (DE)**

Beschreibung

Die Erfindung betrifft einen Chargiergutvorwärmer gemäß dem Oberbegriff des Patentanspruchs 1.

Ein Chargiergutvorwärmer dieser Art ist durch die DE-OS 29 51 826 bekanntgeworden. Er dient hier zur Aufheizung des Chargiergutes, insbesondere von Metallschrott, eines Schmelzgefäßes mit Hilfe der heißen Abgase dieses Schmelzgefäßes. Zu diesem Zweck ist der Chargiergutvorwärmer auf das Schmelzgefäß aufgesetzt und sein Boden durch einen Rost aus einzelnen im Abstand voneinander angeordneten, zwangsgekühlten Roststäben gebildet, die durch Durchtrittsöffnungen in der Behälterwand nach außen geführt sind. Parallel zueinander angeordnete Roststäbe sind jeweils gruppenweise in einen Rahmen eingespannt, der zusammen mit den Roststäben eine konstruktive Einheit, nämlich ein Rostteil bildet. Es können beispielsweise zwei gegenüberliegende Rostteile vorgesehen sein, die aufeinander zu- und voneinander wegbewegbar sind. Im eingefahrenen Zustand (Schließposition) berühren sich die beiden Rostteile in der Mitte des Chargiergutvorwärmers und halten das Chargiergut in diesem zurück, beim Ausfahren der Rostteile in die Freigabeposition bildet sich zunächst in der Mitte ein Spalt, der sich erweitert, so daß das Chargiergut gezielt in der Mitte nach unten in das Einschmelzgefäß fallen kann.

Bei dem bekannten Chargiergutvorwärmer sind die Rahmen der Rostteile zum Ein- und Ausfahren dieser Rostteile längs Schienen verfahrbar. Die Rostteile können waagrecht oder zur Mitte des Schmelzaggregates hin schwach nach unten geneigt sein.

In der Zeitschrift METAL BULLETIN MONTHLY, Oktober 1986, Seiten 47 bis 51 ist ein metallurgisches Schmelzaggregat mit einem aufgesetzten Chargiergutvorwärmer beschrieben, der drei übereinanderliegende Vorwärmabschnitte aufweist. Jeder Vorwärmabschnitt ist unten durch einen Rost begrenzt, der eine Schließposition und eine Freigabeposition einnehmen kann.

Die Rostteile und ihre Betätigungseinrichtung unterliegen einer hohen mechanischen Beanspruchung.

Beim Einbringen des Chargiergutes in den Chargiergutvorwärmer fallen oft größere Schrott-Teile auf die Roststäbe und üben auf die im Rahmen eingespannten Roststäbe eine starke Stoßbeanspruchung aus. Die Stöße müssen von den Rahmen und der Tragkonstruktion aufgenommen werden, in denen die Rahmen verschiebbar gelagert sind. Dies setzt eine massiv ausgebildete und verankerte Tragkonstruktion voraus, für die verhältnismäßig viel Platz bereitgestellt werden muß.

Bei Beschädigung eines Roststabes muß das betreffende Rostteil herausgezogen, die Einspannung im Rahmen gelöst und der beschädigte Roststab durch einen neuen ersetzt werden. Da in der Freigabeposition eines Rostteiles der chargierte Vorwärmer bzw. der betreffende Vorwärmabschnitt des Chargiergutvorwärmers nicht in der Lage ist, das Chargiergut zurückzuhalten, ist mit dem Auswechseln eines Roststabes eine Betriebsunterbrechung verbunden.

Werden nach dem Vorwärmen einer Charge die Rostteile in die Freigabeposition bewegt, so lastet auf diesen Rostteilen das Chargiergut und behindert deren Rückzugbewegung in die Freigabeposition. Dies ist insbesondere gravierend, wenn sich Teile des Chargiergutes zwischen einzelnen Roststäben festgeklemmt haben. Die Betätigungseinrichtung für die Rostteile muß deshalb entsprechend leistungsstark ausgebildet werden. Sind Teile des Chargiergutes zwischen Roststäben verklemmt, so unterliegen nicht nur die Roststäbe, sondern auch die Wand des Chargiergutvorwärmers im Bereich der Durchtrittsstellen der Roststäbe beim Zurückziehen der Rostteile einer starken mechanischen Beanspruchung.

Die zum Erhitzen des Chargiergutes im Chargiergutvorwärmer verwendeten Abgase des metallurgischen Schmelzaggregates unterliegen während der Einschmelz- und Frischperiode größeren Temperaturschwankungen. Insbesondere, wenn das Chargiermaterial nahezu auf Schmelztemperatur vorgewärmt werden soll, kann es dabei im unteren Bereich des Chargiergutvorwärmers zu einem Zusammenbacken des Chargiergutes und damit nicht nur zu einer Behinderung der Durchströmung des Chargiergutes, sondern zu einer zusätzlichen Behinderung beim Verfahren der Rostteile in die Freigabeposition kommen.

Der Erfindung liegt die Aufgabe zu Grunde, bei einem Chargiergutvorwärmer der im Oberbegriff des Anspruchs 1 genannten Art ein Auswechseln der einzelnen Roststäbe während des Betriebs des Vorwärmers zu ermöglichen. Ferner sollen die beim Einbringen des Chargiergutes in den Chargiergutvorwärmer auftretenden Stöße abgemildert und mit einer leichteren, raumsparenden Konstruktion sicher aufgenommen werden können. Die Behinderung beim Zurückziehen der Roststäbe aus dem Behälterinneren in die Freigabeposition durch festgeklemmte oder zusammengebackene Teile des Chargiergutes soll verringert werden, sodaß nicht nur der Kraftaufwand für die Ausziehbewegung der Rostteile, sondern auch die mechanische Beanspruchung der Roststäbe und der Ofenwand bei dieser Ausziehbewegung herabgesetzt werden können.

Die Erfindung ist durch die Merkmale des Anspruchs 1 gekennzeichnet. Vorteilhafte Ausgestaltungen der Erfindung sind den Unteransprüchen zu entnehmen.

Während bei dem bekannten Chargiergutvorwärmer die Roststäbe durch Einspannen in einen Rahmen zu einer starren konstruktiven Einheit verbunden sind und dieser Rahmen durch Schienen geführt wird,

2

sind bei der erfindungsgemäßen Lösung die Roststäbe in einem Tragbalken schwenkbar gelagert und sie stützen sich auf ortsfesten Auflagern an den Eintrittsstellen in den Behälter ab. Wird jedem Roststab oder auch einzelnen Gruppen von Roststäben ein individuelles Lager im Tragbalken zugeordnet, dann kann durch Lösen dieses Lagers der betreffende Roststab oder diese Gruppe schnell entfernt werden. Damit ist eine schnelle Auswechselbarkeit einzelner beschädigter Roststäbe gewährleistet.

Durch die individuelle Schwenkbarkeit einzelner oder gruppenweise zusammengefaßter Roststäbe kann diesen auch bei einer Bewegung des Tragbalkens von der Schließposition in die Freigabeposition eine Schwingbewegung um die Drehachse im Tragbalken verliehen werden, so daß zwischen den Roststäben festgeklemmte Teilchen des Chargiergutes gelockert werden. Eine solche Schwingbewegung ist dadurch auf einfache Weise realisierbar, daß die untere Kante der betreffenden Roststäbe, die beim Zurückziehen der Roststäbe auf dem zugehörigen Auflager gleitet, als Steuerkante ausgebildet ist, die beispielsweise in Längsrichtung des Roststabes abwechselnd Abschnitte unterschiedlicher Neigung, vorzugsweise ein Stufenprofil, aufweist. Wenn die Steuerkanten benachbarter Roststäbe oder benachbarter Gruppen von Roststäben verschieden ausgebildet sind, läßt sich zwischen diesen benachbarten Roststäben eine phasenverschobene Schwingbewegung, insbesondere auch eine gegenläufige Schwingbewegung erzielen, die im Hinblick auf eine Lockerung von klemmenden Chargiergutteilen besonders günstig ist. Der Kraftaufwand beim Herausziehen der Roststäbe und die mechanische Beanspruchung lassen sich hierdurch erheblich vermindern.

Vorzugsweise werden die Auflager als elastische Auflager ausgebildet. Hierdurch lassen sich die Stöße beim Einbringen des Chargiermaterials in den Chargiergutvorwärmer bzw. in den betreffenden Vorwärmabschnitt des Chargiergutvorwärmers abfedern und auch die Ausziehbewegung der Roste begünstigen.

Die Auflager können unmittelbar am Stahlmantel des Chargiergutvorwärmers befestigt werden. Desgleichen ist es vorteilhaft, wenn der Tragbalken an Schwenkarmen befestigt ist, die an der Außenwand des Behälters in einer Ebene angelenkt sind, die oberhalb der Durchtrittsöffnungen der im Tragbalken gelagerten Roststäbe liegt. Auf diese Weise lassen sich sämtliche auf die Roststäbe einwirkenden Kräfte in die Stahlblechkonstruktion des Chargiergutvorwärmers einleiten und es ist keine zusätzliche Verankerung an anderen Bauteilen erforderlich.

Um zu verhindern, daß im unteren Bereich des Chargiergutvorwärmers eine örtliche Überhitzung durch das Heizgas auftritt, können an der Eintrittsseite des Heizgases Kühlstäbe vorgesehen werden, die wassergekühlt sind und mehr oder weniger weit in den Behälter einschiebbar sind. Diese wirken dann wie ein Wärmetauscher, dessen wirksame Fläche einstellbar ist und durch den zu heiße Heizgase auf die gewünschte Temperatur herabgekühlt werden können, bevor sie mit dem Chargiergut im Chargiergutvorwärmer in Berührung kommen. Diese Maßnahme ist insbesondere vorteilhaft, wenn der Behälter auf ein Schmelzgefäß aufgesetzt ist und die heißen Abgase des Schmelzgefäßes als Heizgase dienen.

Die Erfindung wird durch ein Ausführungsbeispiel anhand von 5 Figuren näher erläutert. Es zeigen

Fig. 1 einen auf ein metallurgisches Schmelzaggregat aufgesetzten Chargiergutvorwärmer, teilweise im geschnittenen Zustand,

Fig. 2 den Schnitt II-II von Fig. 1,

Fig. 3 einen vergrößerten Ausschnitt aus Fig. 1 zur Verdeutlichung der Aufhängung der einzelnen Roststäbe,

Fig. 4 die Unteransicht zweier benachbarter Roststäbe,

Fig. 5 den Schnitt V-V von Fig. 1.

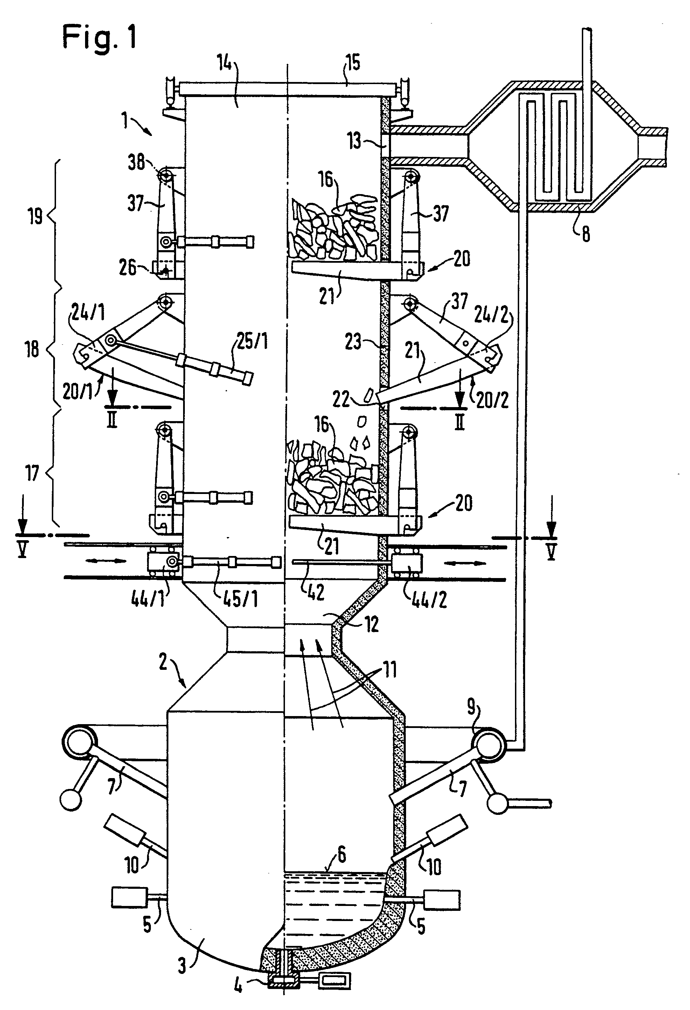

In Fig. 1 ist ein Chargiergutvorwärmer 1 auf einen Metallschmelzofen 2 aufgesetzt und mit diesem zu einer konstruktiven Einheit verbunden. Dieses metallurgische Schmelzaggregat ist in der rechten Hälfte im Schnitt dargestellt.

Der Metallschmelzofen umfaßt ein Ofengefäß 3 mit einem Bodenabstich 4 und mehreren durch die Wand des Ofengefäßes hindurchgeführten Düsen. Es sind Unterbaddüsen 5 vorgesehen, die unterhalb des Metallbadspiegels 6 in das Gefäß münden und durch die Sauerstoff eingeblasen wird, ferner Düsen 7, die oberhalb des Metallbades einmünden und durch die in einem Wärmetauscher 8 vorgewärmte Luft über eine Ringleitung 9 sowie Sauerstoff für die Nachverbrennung zuführbar sind. Schließlich sind oberhalb des Metallbadspiegels 6 weitere, als Brenner 10 benutzbare Düsen vorgesehen.

Die durch Pfeile 11 dargestellten heißen Abgase des Metallschmelzofens 2 treten an der Eintrittsseite 12 des auf den Metallschmelzofen aufgesetzten Chargiergutvorwärmers in diesen ein, durchströmen diesen von unten nach oben und verlassen ihn nach Abgabe des größten Teils ihrer fühlbaren Wärme an das Chargiergut des Chargiergutvorwärmers an der oberen Austrittsseite 13, um dann noch den Wärmetauscher 8 für die Luftvorwärmung zu durchströmen, bevor sie in den Abgaskamin gelangen. Der Chargiergutvorwärmer ist in Form eines Behälters 14 ausgebildet, der oben durch einen Deckel 15 verschlossen ist. Dieser kann zum Einbringen des Chargiergutes 16 zur Seite gefahren werden.

Der in Fig. 1 dargestellte Chargiergutvorwärmer 1 enthält drei übereinanderliegende Vorwärmabschnitte 17, 18 und 19, die jeweils in gleicher Weise aufgebaut sind. Jeder Vorwärmabschnitt ist unten mit einem Rost 20 aus einzelnen im Abstand voneinander angeordneten Roststäben 21 versehen, die durch Durchtrittsöffnungen 22 in der Behälterwand 23 nach außen geführt sind.

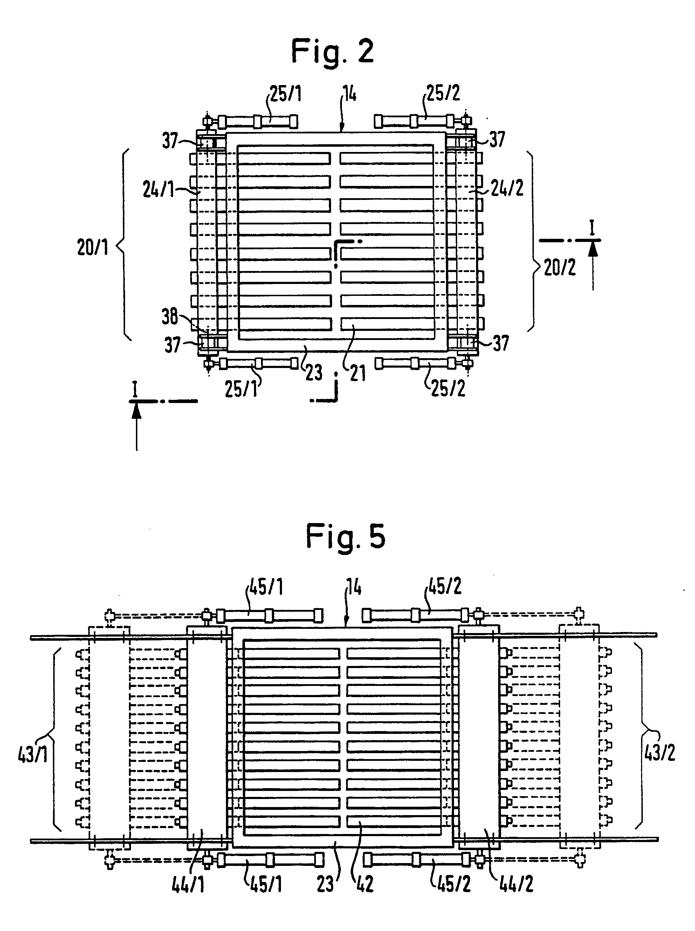

Wie Fig. 2 zeigt, sind die äußeren Enden jeweils einer Gruppe von parallel zueinander angeordneten Roststäben 21 in einem Tragbalken 24/1 bzw. 24/2 gelagert, der durch eine Betätigungseinrichtung 25/1 bzw. 25/2 zwischen einer Schließposition, in der die Roststäbe 21 in das Innere des Behälters 14 ragen und einer Freigabeposition, in der die Roststäbe 21 aus dem Behälterinneren zurückgezogen sind, bewegbar ist. In Fig. 1 befinden sich die Roststäbe des unteren und des oberen Vorwärmabschnittes 17 bzw. 19 in der Schließposition, in der der Rost in der Lage ist, das Chargiergut 16 in dem betreffenden Vorwärmabschnitt zu halten und die Roststäbe 21 des mittleren Vorwärmabschnittes 18 befinden sich in der Freigabeposition. Die im Tragbalken 24/1 gelagerten Roststäbe bilden somit eine Einheit, nämlich ein Rostteil 20/1 und die im Tragbalken 24/2 gelagerten Roststäbe eine weitere gegenüberliegende Einheit, nämlich ein Rostteil 20/2. Jeder der Vorwärmabschnitte 17, 18 bzw. 19 ist somit unten durch individuell betätigbare Rostteile 20/1 und 20/2 abgeschlossen.

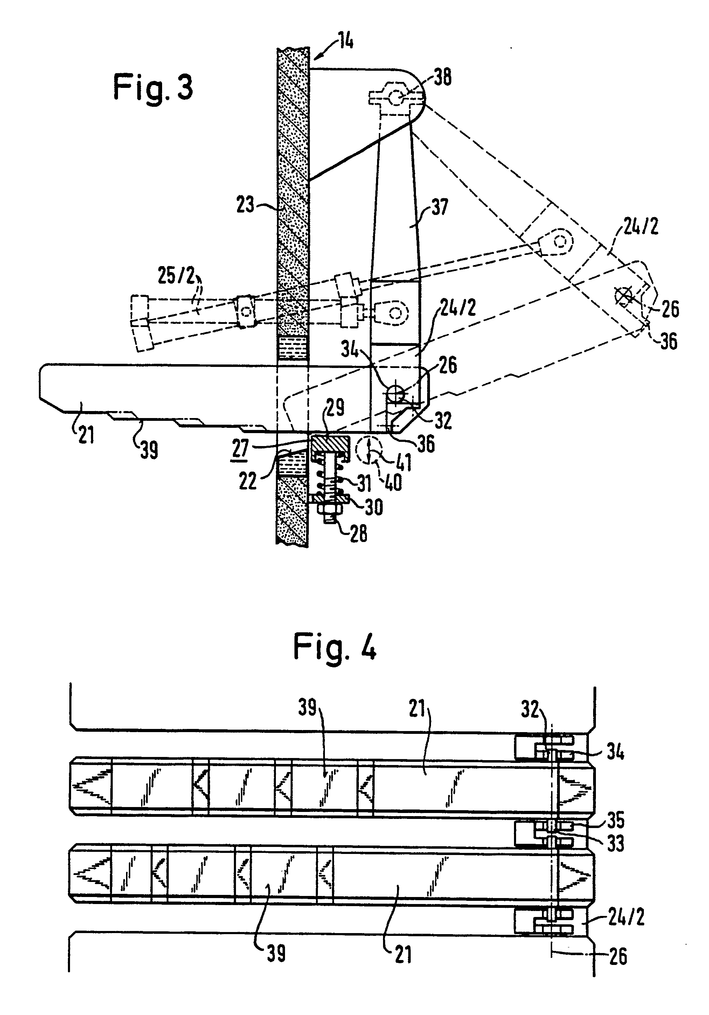

Fig. 3 stellt einen vergrößerten Ausschnitt aus Fig. 1 dar, wobei mit ausgezogenen Linien die Lage eines Roststabes 21 in der Schließposition und mit gestrichelten Linien die Lage dieses Roststabes in der Freigabeposition veranschaulicht ist. Fig. 4 zeigt die Unteransicht zweier benachbarter Roststäbe.

Jeder Roststab 21 ist im zugehörigen Tragbalken 24/2 um eine waagrechte Achse 26 individuell drehbar gelagert und es ist ihm an seiner Eintrittsstelle in den Behälter 14, d.h. in der Nähe der für den betreffenden Roststab vorgesehenen Durchtrittsöffnung 22 in der Behälterwand 23 ein Auflager 27 zugeordnet.

Obwohl bei dem Ausführungsbeispiel jedem Roststab 21 ein eigenes Auflager 27 zugeordnet ist und jeder Roststab auch von den anderen unabhängig um die waagrechte Achse 26 schwenkbar ist, können auch für einige Roststäbe gemeinsame Auflager und eine drehstarre Verbindung zwischen den betreffenden Roststäben vorgesehen werden.

Das Auflager 27 ist vorzugsweise als elastisches Auflager ausgebildet und enthält im dargestellten Fall eine auf einen Bolzen 28 aufgesetzte Verschließkappe 29. Der Bolzen ist in einem Flansch 30 axial verschiebbar gelagert und wird durch eine Druckfeder 31 nach oben gedrückt.

Die drehbare Lagerung eines Roststabes 21 im zugehörigen Tragbalken 24/2 ist bei dem Ausführungsbeispiel in der Weise realisiert, daß jeder Roststab an einem Ende mit zwei seitlichen Drehzapfen 32 und 33 versehen ist, der jeweils in einem Lager 34 und 35 gelagert ist. Die Lager besitzen eine U-förmige Ausnehmung (vergleiche Fig. 3) in der der betreffende Drehzapfen aufgenommen wird und sind mittels aufgeschraubter Winkel 36 abgeschlossen. Jedem Drehzapfen ist ein eigener Winkel zugeordnet, so daß durch Lösen der Winkel zu beiden Seiten eines Roststabes dieser Roststab aus dem Verbund mit den anderen Roststäben des gleichen Rostteils gelöst und ausgewechselt werden kann. Jeder Tragbalken 24/1 und 24/2 ist an zwei Schwenkarmen 37 (vergleiche auch Fig.1 und 2) befestigt, die an der Außenwand des Behälters 14 mittels Schwenklagern 38 in einer Ebene angelenkt sind, die oberhalb der Durchtrittsöffnungen 22 der im Tragbalken 24/1 bzw. 24/2 gelagerten Roststäbe 21 liegt. Jedem der Schwenkarme 37 ist als Betätigungseinrichtung 25/1 bzw. 25/2 ein Hydraulikzylinder zugeordnet, der drehbar an der Behälterwand 23 gelagert ist und am zugehörigen Schwenkarm 37 zwischen dessen Anlenkstelle und der Befestigungsstelle des Tragarmes 24/1 bzw,. 24/2 angreift. Die Hydraulikzylinder der Schwenkarme eines Tragbalkens sind synchron steuerbar, so daß der betreffende Tragbalken aus der in Fig. 3 mit ausgezogenen Linien dargestellten Position gleichmäßig um die Achse des Schwenklagers 38 nach außen in die gestrichelt dargestellte Position geschwenkt werden kann. Bei dieser Schwenkbewegung werden sämtliche Roststäbe 21 eines Rostteils 20/1 bzw. 20/2 aus dem Behälterinneren zurückgezogen, wobei sie mit ihrer unteren Kante über ihr zugehöriges Auflager 27 gleiten. Der Behälter 14 ist im vorliegenden Fall im Grundriß rechteckig ausgebildet und die Tragbalken 24/1 und 24/2 verlaufen in sämtlichen Positionen parallel zu gegenüberliegenden Seiten der Rechteckform des Grundrisses.

Wie die Fig. 3 und 4 zeigen ist bei einer Bewegung des Tragbalkens über das zugehörige Auflager 27 gleitende untere Kante der einzelnen Roststäbe 21 als Steuerkante 39 ausgebildet, die im dargestellten Fall ein Stufenprofil aufweist. Gleitet die Steuerkante beim Herausziehen des betreffenden Rostteils und damit des betreffenden Roststabes 21 über das Auflager, dann wird bei dieser Ausziehbewegung der noch im Behälterinneren befindliche Teil des Roststabes stufenweise abgesenkt und damit der Roststab in eine Schwing- bzw. -Rüttelbewegung versetzt, durch die die für die Auszugsbewegung erforderliche Kraft wesentlich verringert wird. Besonders vorteilhaft ist es, wenn die Steuerkanten 39 benachbarter Roststäbe 21 verschieden ausgebildet sind, als zum Beispiel das Stufenprofil der Steuerkanten 39 benachbarter Roststäbe relative zueinander versetzt ist, wie es in Fig. 3 durch eine strich-punktierte Linie gegenüber der ausgezogenen Linie dargestellt ist. Auch die Unteransicht von Fig. 4 läßt die gegenseitige Versetzung der Stufenprofile erkennen.

Bei verschiedener Ausbildung der Steuerkanten 39 benachbarter Roststäbe 21 führen diese beim Ausziehen der Roststäbe eine gegenläufige Schwingbewegung aus, so daß zwischen den Roststäben eingeklemmte Chargiergutteile gelöst werden. Eine weitere Verringerung der für die Auszugsbewegung der Roststäbe erforderlichen Kraft wird erreicht, wenn die Verschleißkappen 29 der Auflager 27 durch Rollen ersetzt werden oder zusätzlich Rollen vorgesehen sind - eine solche Rolle 40 ist in Fig. 3 gestrichelt dargestellt - die so weit anhebbar sind, daß sich auf ihnen die Roststäbe 21 beim Zurückziehen mit ihrer unteren Kante abstützen können. Die mögliche Heb- und Senkbewegung ist durch einen Doppelpfeil 41 symbolisiert.

Wie in den Fig. 1 und 5 dargestellt, sind an der Eintrittsseite 12 der Heizgase Kühlstäbe 42 in den Behälter 14 einschiebbar. Diese Kühlstäbe enthalten Flüssigkeitskanäle und dienen dazu, die aus dem Ofengefäß 3 hochströmenden Heizgase 11 so weit abzukühlen, daß ein Zusammenbacken von einzelnen Teilen des Chargiergutes verhindert wird.

Die Kühlstäbe 42 sind ähnlich wie die Roststäbe 21 gruppen weise zusammengefaßt, nämlich im vorliegenden Fall zu einer Gruppe 43/1 und einer Gruppe 43/2. Die Kühlstäbe 42 der Gruppe 43/1 sind in einem Träger 44/1 eingespannt und die Kühlstäbe der Gruppe 43/2 in einen Träger 44/2. Die Träger 44/1 und 44/2 sind, wie aus Fig. 1 ersichtlich ist, horizontal verfahrbar. Mit Hilfe von Hydraulikantrieben 45/1 bzw. 45/2, die individuell steuerbar sind, können die Kühlstäbe einer Gruppe mehr oder weniger weit in das Behälterinnere des Chargiergutvorwärmers 1 eingeschoben und damit die Kühlwirkung der als Wärmetauscher wirkenden Kühlstäbe 42 den Erfordernissen angepaßt werden.

Es soll noch erwähnt werden, daß nicht nur die Kühlstäbe 42, sondern auch die Roststäbe 21 Flüssigkeitskanäle und entsprechende Anschlüsse an einen Flüssigkeitskreislauf aufweisen.

Mit dem beschriebenen Chargiergutvorwärmer läßt sich das Chargiergut schrittweise durch die Vorwärmzonen 19, 18 und 17 bewegen und in Verbindung mit der steuerbaren Kühlwirkung durch die Kühlstäbe 42 gleichmäßig bis auf nahezu die Erweichungstemperatur erhitzen. Die Rostteile der einzelnen Vorwärmstufen sind individuell betätigbar.

**Ansprüche**

1. Chargiergutvorwärmer (1) zum Vorwärmen von Chargiergut (16) eines metallurgischen Schmelzaggregates mit den folgenden Merkmalen :
   a) ein Behälter (14) zur Aufnahme des vorzuwärmenden Chargiergutes (16) ist unten mit einem Rost (20) aus einzelnen im Abstand voneinander angeordneten Roststäben (21) versehen, die durch Durchtrittsöffnungen (22) in der Behälterwand (23) nach außen geführt sind,
   b) die äußeren Enden wenigstens einer Gruppe von parallel zueinander angeordneten Roststäben (21) sind in einem Tragbalken (24/1, 24/2) gelagert, der durch eine Betätigungseinrichtung (25/1, 25/2) zwischen einer Schließposition, in der die Roststäbe (21) in das Innere des Behälters (14) ragen, und einer Freigabeposition, in der die Roststäbe (21) aus dem Behälterinneren zurückgezogen sind, bewegbar ist, dadurch gekennzeichnet, daß
   c) die Roststäbe (21) im Tragbalken (24/1, 24/2) um eine waagrechte Achse (26) drehbar gelagert sind und daß ihnen an den Eintrittsstellen in den Behälter (14) Auflager (27) zugeordnet sind.

2. Chargiergutvorwärmer nach Anspruch 1, dadurch gekennzeichnet, daß die Auflager (27) als elastische Auflager ausgebildet sind.

3. Chargiergutvorwärmer nach Anspruch 1 oder 2, dadurch gekennzeichnet, daß die bei einer Bewegung des Tragbalkens (24/1, 24/2) von der Schließposition in die Freigabeposition über das zugehörige Auflager (27) gleitende untere Kante bei wenigstens einem Teil der Roststäbe (21) in deren Längsrichtung als Steuerkante (39) ausgebildet ist, die den betreffenden Roststab (21) beim Zurückziehen in eine Schwingbewegung um seine Drehachse (26) im Tragbalken (24/1, 24/2) versetzt.

4. Chargiergutvorwärmer nach Anspruch 3, dadurch gekennzeichnet, daß die Steuerkante (39) des Roststabes (21) in dessen Längsrichtung abwechselnd Abschnitte unterschiedlicher Neigung aufweist.

5. Chargiergutvorwärmer nach Anspruch 4, dadurch gekennzeichnet, daß die Steuerkante (39) als Stufenprofil ausgebildet ist.

6. Chargiergutvorwärmer nach einem der Ansprüche 3 bis 5, dadurch gekennzeichnet, daß die Steuerkanten (39) benachbarter Roststäbe (21) verschieden ausgebildet sind.

7. Chargiergutvorwärmer nach einem der Ansprüche 1 bis 6, dadurch gekennzeichnet, daß wenigstens einem Teil der Auflager (27) heb- und senkbare Rollen (40) zugeordnet sind, auf denen sich die Roststäbe (21) beim Zurückziehen mit ihrer unteren Kante abstützen.

8. Chargiergutvorwärmer nach einem der Ansprüche 1 bis 7, dadurch gekennzeichnet, daß die Roststäbe (21) im Tragbalken (24/1, 24/2) individuell lösbar gelagert sind.

9. Chargiergutvorwärmer nach einem der Ansprüche 1 bis 8, dadurch gekennzeichnet, daß der Tragbalken (24/1, 24/2) an Schwenkarmen (37) befestigt ist, die an der Außenwand des Behälters (14) in einer Ebene angelenkt sind, die oberhalb der Durchtrittsöffnungen (22) der im Tragbalken gelagerten Roststäbe (21) liegt.

10. Chargiergutvorwärmer nach Anspruch 9, dadurch gekennzeichnet, daß wenigstens zwei Schwenkarmen (37) eines Tragbalkens (24/1, 24/2) synchron steuerbare Betätigungseinrichtungen (25/1, 25/2) zugeordnet sind, die drehbar an der Behälterwand (23) gelagert sind und die am Schwenkarm (39) zwischen dessen Anlenkstelle (38) und der Befestigungsstelle des Tragbalkens (24/1, 24/2) angreifen.

11. Chargiergutvorwärmer nach einem der Ansprüche 1 bis 10, dadurch gekennzeichnet, daß der Behälter (14) im Grundriß rechteckig ausgebildet ist.

12. Chargiergutvorwärmer nach einem der Ansprüche 1 bis 11, dadurch gekennzeichnet, daß der Rost (20) durch zwei Gruppen von Roststäben (Rostteile 20/1, 20/2) gebildet ist, die von gegenüberliegenden Seiten des Behälters (14) in diesen einschiebbar sind.

13. Chargiergutvorwärmer nach einem der Ansprüche 1 bis 12, dadurch gekennzeichnet, daß an der Eintrittsseite (12) des Heizgases Kühlstäbe (42) in den Behälter (14) einschiebbar sind.

14. Chargiergutvorwärmer nach einem der Ansprüche 1 bis 13, dadurch gekennzeichnet, daß der Behälter (14) wenigstens zwei übereinanderliegende Vorwärmabschnitte (17, 18, 19) mit jeweils gruppenweise einschiebbaren und zurückziehbaren Roststäben (21) enthält.

15. Chargiergutvorwärmer nach einem der Ansprüche 1 bis 14, dadurch gekennzeichnet, daß der Behälter (14) auf ein Ofengefäß (3) aufgesetzt ist und die heißen Abgase des Ofengefäßes als Heizgase dienen.

16. Chargiergutvorwärmer nach einem der Ansprüche 1 bis 15, dadurch gekennzeichnet, daß die Roststäbe (21) Kanäle für ein Kühlfluid aufweisen.

## Claims

1. A charging material preheater (1) for preheating charging material (16) for a metallurgical smelting unit, comprising the following features :

   a) a container (14) for accommodating the charging material (16) to be preheated is provided at the bottom with a grid (20) comprising individual spaced-apart grid bars (21) which are extended to the exterior through passage openings (22) in the container wall (23), and

   b) the outer ends of at least one group of grid bars (21) which are arranged in mutually parallel relationship are mounted in a support beam (24/1, 24/2) which is movable by an actuating means (25/1, 25/2) between a closed position in which the grid bars (21) project into the interior of the container (14) and a release position in which the grid bars (22) are retracted out of the interior of the container, characterised in that

   c) the grid bars (21) are mounted in the support beam (24/1, 24/2) rotatably about a horizontal axis (26) and that support means (27) are associated therewith at the points of entry into the container (14).

2. A charging material preheater according to claim 1 characterised in that the support means (27) are in the form of resilient support means.

3. A charging material preheater according to claim 1 or claim 2 characterised in that, in regard to at least same of the grid bars (21), the lower edge which slides over the associated support means (27) upon a movement of the support beam (24/1, 24/2) from the closed position into the release position, is formed in the longitudinal direction of the grid bars as a control edge (39) which in the retraction movement displaces the respective grid bar (21) with a pivotal movement about its axis of rotation (26) in the support beam (24/1, 24/2).

4. A charging material preheater according to claim 3 characterised in that the control edge (39) of the grid bar (21) comprises portions of different inclinations alternately in the longitudinal direction of the grid bar.

5. A charging material preheater according to claim 4 characterised in that the control edge (39) is in the form of a stepped profile.

6. A charging material preheater according to one of claims 3 to 5 characterised in that the control edges (39) of adjacent grid bars (21) are of different configurations.

7. A charging material preheater according to one of claims 1 to 6 characterised in that associated with at least some of the support means (27) are rollers (40) which can be raised and lowered and on which the grid bars (21) are supported by way of their lower edge in the retraction movement.

8. A charging material preheater according to one of claims 1 to 7 characterised in that the grid bars (21) are individually releasably mounted in the support beam (24/1, 24/2).

9. A charging material preheater according to one of claims 1 to 8 characterised in that the support beam (24/1, 24/2) is secured to pivotal arms (37) which are pivotally mounted to the outside wall of the container (14) in a plane which lies above the passage openings (22) for the grid bars (21) mounted in the support beam.

10. A charging material preheater according to claim 9 characterised in that associated with at least two pivotal arms (37) of a support beam (24/1, 24/2) are synchronously controllable actuating means (25/1, 25/2) which are mounted rotatably on the container wall (23) and which engage the pivotal arm (39) between the mounting location (38) thereof and the fixing location of the support beam (24/1, 24/2).

11. A charging material preheater according to one of claims 1 to 10 characterised in that the container (14) is of a rectangular configuration in plan.

12. A charging material preheater according to one of claims 1 to 11 characterised in that the grid (20) is formed by two groups of grid bars (grid portions 20/1, 20/2) which can be pushed into the container (14) from oppositely disposed sides thereof.

13. A charging material preheater according to one of claims 1 to 12 characterised in that cooling bars (42) can be pushed into the container (14) on the entry side (12) of the heating gas.

14. A charging material preheater according to one of claims 1 to 13 characterised in that the container (14) includes at least two preheater portions (17, 18, 19) which are disposed in superposed relationship, each having grid bars (21) which can be introduced and retracted in a group-wise manner.

15. A charging material preheater according to one of claims 1 to 14 characterised in that the container (14) is fitted on to a furnace vessel (3) and the hot waste gases of the furnace vessel serve as heating gases.

16. A charging material preheater according to one of claims 1 to 15 characterised in that the grid bars (21) have ducts for a cooling fluid.

## Revendications

1. Appareil de préchauffage (1) de produits à charger, destiné à préchauffer du produit à charger (16) d'une installation métallurgique de fusion, ayant les caractéristiques suivantes :

a) une cuve (14) de réception du produit (16) à charger et à préchauffer est munie en bas d'une grille (20), qui est constituée de barreaux de grille (21) disposés individuellement, à distance les uns des autres, et qui passe à l'extérieur par des ouvertures de passage (22) ménagées dans la paroi (23) de la cuve,

b) des extrémités extérieures d'au moins un groupe de barreaux de grille (21), disposés parallèlement les uns aux autres, sont montées dans une poutre-support (24/1, 24/2), qui, par un dispositif de manoeuvre (25/1, 25/2), peut passer d'une position de fermeture, dans laquelle les barreaux de grille 21 sont à l'intérieur de la cuve 14, à une position de dégagement dans laquelle les barreaux de grille 21 sont retirés de l'intérieur de la cuve, caractérisé en ce que

c) les barreaux de grille (21) sont montés tournants autour d'un axe (26) horizontal dans la poutre-support (24/1, 24/2) et il leur est associé des appuis (27) aux points d'entrée dans la cuve (14).

2. Appareil de préchauffage de produits à charger suivant la revendication 1, caractérisé en ce que les appuis (27) sont réalisés sous forme d'appuis élastiques.

3. Appareil de préchauffage de produits à charger suivant la revendication 1 ou 2, caractérisé en ce que le bord inférieur glissant sur l'appui (17) correspondant, lors d'un déplacement de la poutre-support (24/1, 24/2) de la position de fermeture à la position de dégagement, est constitué, pour au moins une partie des barreaux de grille (21), dans leur direction longitudinale, sous la forme d'un bord de commande (39) qui donne au barreau de grille (21) concerné, lors du retrait, un mouvement d'oscillation autour de son axe de rotation (26) dans la poutre-support (24/1, 24/2).

4. Appareil de préchauffage de produits à charger suivant la revendication 3, caractérisé en ce que le bord de commande (39) du barreau de grille (21) comporte, dans sa direction longitudinale, des sections alternées d'inclinaisons différentes.

5. Appareil de préchauffage de produits à charger suivant la revendication 4, caractérisé en ce que le bord de commande (39) est constitué en profil en paliers.

6. Appareil de préchauffage de produits à charger suivant l'une des revendications 3 à 5, caractérisé en ce que les bords de commande (39) de barreaux de grille (21) voisins sont constitués différemment.

7. Appareil de préchauffage de produits à charger suivant l'une des revendications 1 à 6, caractérisé en ce qu'à au moins une partie des appuis (27), sont associés des rouleaux (40) qui peuvent être soulevés et abaissés et sur lesquels s'appuient les bords inférieurs des barreaux de grille (21) lors du retrait.

8. Appareil de préchauffage de produits à charger suivant l'une des revendications 1 à 7, caractérisé en ce que les barreaux de grille (21) sont montés amovibles individuellement dans la poutre-support (24/1, 24/2).

9. Appareil de préchauffage de produits à charger suivant l'une des revendications 1 à 8, caractérisé en ce que la poutre-support (24/1, 24/2) est fixée à des bras basculants (37), qui sont articulés à la paroi extérieure de la cuve (14) dans un plan qui est au-dessus des ouvertures de passage (22) des barreaux de grille (21) montés dans la poutre-support.

10. Appareil de préchauffage de produits à charger suivant la revendication 9, caractérisé en ce qu'à au moins deux bras basculants (37) d'une poutre-support (24/1, 24/2) sont associés des dispositifs de manoeuvre (25/1, 25/2), qui peuvent être commandés en synchronisme, qui sont montés tournants sur la paroi (23) de la cuve et qui attaquent le bras basculant (39) entre son point d'articulation (38) et le point de fixation de la poutre-support (24/1, 24/2).

11. Appareil de préchauffage de produits à charger suivant l'une des revendications 1 à 10, caractérisé en ce que la cuve (14) a une section en coupe horizontale, qui est rectangulaire.

12. Appareil de préchauffage de produits à charger suivant l'une des revendications 1 à 11, caractérisé en ce que la grille (20) est formée de deux groupes de barreaux de grille (grilles 20/1, 20/2), qui peuvent être insérés dans la cuve (14) par des côtés opposés de celle-ci.

13. Appareil de préchauffage de produits à charger suivant l'une des revendications 1 à 12, caractérisé en ce que, du côté de l'entrée (12) du gaz de chauffage, des barreaux de refroidissement (42) peuvent être insérés dans la cuve (14).

14. Appareil de préchauffage de produits à charger suivant l'une des revendications 1 à 13, caractérisé en ce que la cuve (14) comporte au moins deux sections de préchauffage (17, 18, 19) superposées, ayant chacune des barreaux de grille (21) pouvant être insérés et pouvant être retirés en groupes.

15. Appareil de préchauffage de produits à charger suivant l'une des revendications 1 à 14, caractérisé en ce que la cuve (14) est posée sur une carcasse de four (3) et les gaz brûlés chauds de la carcasse du four servent de gaz de chauffage.

16. Appareil de préchauffage de produits à charger suivant l'une des revendications 1 à 15, caractérisé en ce que les barreaux de grille (21) comportent des canaux pour un fluide de refroidissement.

Fig. 1

# Fig. 2

# Fig. 5

# Fig. 3

# Fig. 4